# EUROPEAN PATENT APPLICATION

(11) **EP 0 843 983 A1**
(43) Date of publication of application: **27.05.1998**
(21) Application number: 97203558.8
(22) Date of filing: 14.11.1997
(51) Int. Cl.: A47J 31/40

(54) **A mixing device for use in a beverage machine**

(30) Priority: 26.11.1996 NL 1004615
(71) Applicant: KONINKLIJKE OLLAND GROEP B.V., 3433 PJ Nieuwegein (NL)
(72) Inventor: Evers, Lucas Alphonsus Maria, 3981 GM Bunnik (NL)
(74) Representative: Boelsma, Gerben Harm, Ir.

(57) **Abstract**

A mixing device for use in a beverage machine, comprising a housing having inlet openings for ingredients to be mixed in its upper part and having an outlet towards an underlying mixing chamber having an outlet duct. The mixing chamber has a closed front wall and a removable rear wall on the opposite side. Adjacent the rear wall there is provided a mixing disc which is carried by a horizontal shaft that is rotatably supported between the front and rear walls. The device is placed with its rear side against a wall of the machine casing, behind which there is a drive motor. The coupling between mixing disc and drive shaft is formed by a magnetic field going through said rear wall and generated between magnets that are provided in said mixing disc and on the drive shaft end respectively.

## Description

The invention relates to a mixing device for use in a beverage machine, comprising a mixing beaker having inlet openings for liquid and for material to be mixed therewith and having an outlet towards a mixing chamber within a housing that is positioned under said mixing beaker and has an outlet duct at its bottom, said housing having a closed front wall and a removable rear wall, while it is adapted to be detachably mounted with its rear side to an upright casing wall of the machine, a mixing member being mounted within the chamber adjacent the rear side of the housing for rotation about a lying axis, said mixing member being adapted to be driven by an electric motor provided behind said casing wall.

Such a device is known from FR-A 2 707 618. A mixing device of this type has the advantage, that with a high-speed mixing member an additional foaming effect may be obtained, as is desirable e.g. with some types of coffee and chocolate drinks.

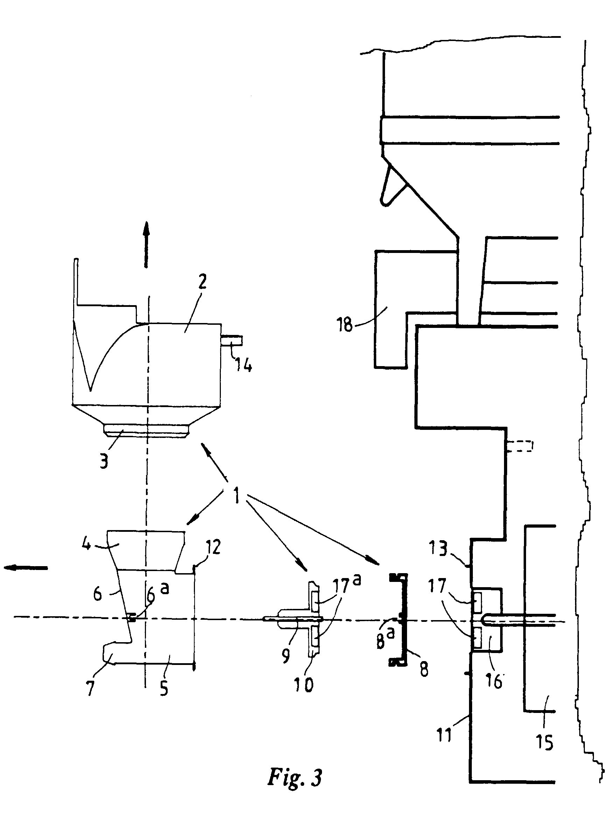

With the well-known device the shaft carrying the mixing device extends through the removable rear wall and the upright casing wall and is connected, behind the latter wall, to the drive shaft of the electric motor. In the document above referred to a number of purely mechanical spigot joints are shown. Besides a particular type of spigot joint is diagrammatically shown in fig. 3a of the document, wherein a tapered shaft end of the electric motor engages a complementary conical recess in the adjoining end of the shaft of the mixing member. It is said in general terms that the engaging shaft ends are kept engaged by magnetic force. It has not been indicated and is neither obvious how this could be accomplished.

Advantageously the spigot joints disclosed in the above mentioned document enable the mixing device to be easily disconnected as a unit from the machine casing for a subsequent transfer to a place where the device can be disassembled and cleaned. It is a disadvantage, however, that the shaft of the mixing member extends through the rear wall of the mixing chamber, so that there is a risk of leakage of liquid from the mixing chamber, with the inherent risk for contamination around the shaft passing through the upright casing wall. Anyway, in the drawings of the documents the shaft of the mixing member is shown extending through an annular member on the inner side of the rear wall of the mixing chamber, which annular member is likely to be meant as a sealing member (compare also the mixing device according to US 4 185 927).

It is an object of this invention to improve the well-known device referred to hereinabove.

Accordingly the invention provides a device of the type above referred to, which is characterized in that the disc-shaped mixing member is provided on a support shaft that has its ends rotatably supported in seats provided on the inner side of the front wall and of the rear wall respectively, the rearwardly facing end face of the mixing disc carrying a set of permanent magnets, which cooperate with a second set of magnets that are provided, at corresponding locations, on the forwardly directed end face of a coupling member on the shaft end of the electric motor.

Due to the connection between the shaft of the mixing member and the motor shaft being accomplished in a purely magnetic fashion - through a magnetic field produced by two cooperating sets of magnets - the rear wall can be completely closed. Moreover the inwardly extending sealing structure with the well-known device is no longer existing and is substituted by a simple bearing of the axiale type, due to which the permanent magnets on the end face of the mixing disc may be positioned rather close to the substantially flat rear wall. Journalling of the shaft ends of the mixing disc shaft in seats or bearings of the axial type enables a quick disassembling and assembling of the device.

It is to be noted that EP-A 0 285 210 discloses a mixing device for use with a beverage machine, in which a shaft traversing the mixing chamber rear wall is missing as well and whereby the device may also be easily disassembled for cleaning purposes. With this well-known device a mixing beaker is connected to a cylindrical mixing chamber positioned therebelow, in which a mixing member provided with one or more permanent magnets is mounted for a reciprocating movement (vibration) about the vertical axis of the mixing chamber under the influence of a magnetic field that is produced by an electromagnet positioned on the outer side. This well-known device is of a quite different type, which does not have a foaming effect.

Finally it is to be remarked, that the purely magnetic type of coupling of two shaft ends on both sides of a closed wall is known per se with an ultrafiltration cell as disclosed in the document US 3 539 155. In this case a vertical shaft, carrying at its lower free end an agitation disc positioned close to the bottom wall of a cylindrical housing, is provided at its upper end with a horse shoe magnet that has its poles facing towards the closed upper wall, said magnet cooperating with a similar magnet on the shaft end of an electric motor placed on top of said upper wall. The shaft is rotatably supported by a bearing cage, that extends from the closed upper wall downwardly to adjacent the agitation disc.

The invention will be hereinafter further explained by way of example with reference to the drawing.
Fig. 1 is a diagrammatic fragmentary side elevation of a beverage dispensing machine, provided with a mixing device according to the invention;
Fig. 2 is a diagrammatic end view of the beverage dispensing machine, as seen from the left in Fig. 1 and
Fig. 3 is a diagrammatic side view of the same machine, whereby the mixing device is removed from the remainder of the casing of the machine and the mixing device is disassembled.

In the drawing 1 is the mixing device according to the invention, which is composed of a mixing beaker 2, that has a lower outlet duct 3 fitting in an upper inlet duct 4 of a mixing chamber provided within a housing 5.

The mixing chamber within the housing 5 is delimited on the front side by a closed wall 6, with a beverage outlet duct 7 extending therefrom near the bottom. The mixing chamber is delimited on the opposite side by a circular wall 8, having a circumferential flange with an O-ring (not shown) provided therein for sealingly mounting said wall into the rear open end of the housing 5 so as to close the latter. An internal shoulder (not shown) in the housing 5 may serve as a stop shoulder for the wall 8.

The front wall 6 and the removable rear wall 8 are provided with axially directed seats 6a and 8a respectively, in which the ends of a shaft 9 may be rotatably supported when placing the wall 8 into the housing. A mixing disc 10 is provided on the shaft 9, having axially and radially extending mixing ribs on its end face directed towards the front wall 10. Upon assembling the mixing disc 10 is positioned closely adjacent the rear wall 8.

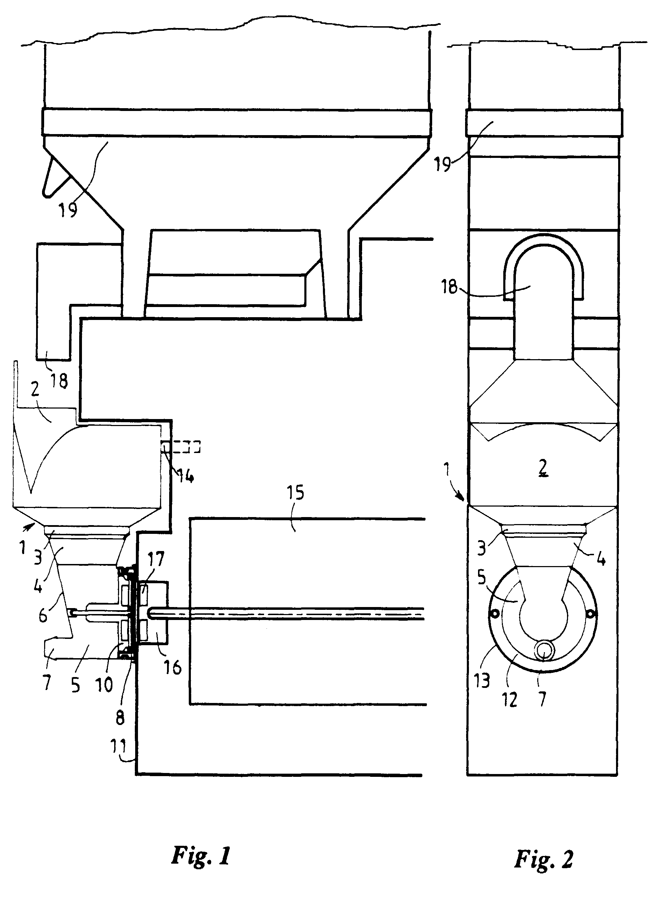

In the state ready for use the mixing device 1 is mounted with the rear side of its housing 5 to a wall 11 of the casing of the beverage machine (see Fig. 1 and 2). The mixing device 1 may be easily put in place by moving it horizontally towards the housing 5 and allowing a flange 15 of the housing 5 to engage a centring rib 3 projecting from the wall 11, while simultaneously causing an inlet duct 14 provided on the beaker 2 for e.g. hot water to slide into or over a corresponding connection within the casing of the beverage machine.

Within the casing of the beverage machine, behind the wall 11, an electric motor 15 is provided for driving the mixing disc 8. The speed of the electric motor 15 is 10.000 - 14.000 r.p.m. The projecting shaft end of the motor carries a coupling body 16, that extends with its end face closely adjacent the inner side of the wall 11 and is provided with a set of permanent magnets 17 embedded in said end face.

The mixing disc 10 is, at correspondingly oriented locations, provided with permanent magnets 17a embedded in the rearwardly facing end face of the disc. The magnetic field between the permanent magnet sets 17 and 17a will cause the individual magnets of the magnet set 17a to align themselves directly opposite the magnets of the magnet set 17, so that energizing of the motor 15 will result in a torque being transferred to the mixing disc 10. Due to the two sets of permanent magnets 17 and 17a respectively being embedded in a body of plastics material and also the walls 8 and 11 being formed of plastics material, an undisturbed field of force between the two sets of permanent magnets 17 and 17a is secured.

19 is a supply container having in its bottom portion a metering screw (not shown). In operation powdered material, such as cacao powder or powdered coffee, is supplied from the container, via an outlet duct 18 to the open upper end of the beaker 2. Within the mixing chamber the powdered material is mixed with liquid, such as hot water or milk, supplied through the inlet 14, to produce the desired, foamed beverage (coffee, chocolate).

## Claims

1. A mixing device for use in a beverage machine, comprising a mixing beaker having inlet openings for liquid and for material to be mixed therewith and having an outlet towards a mixing chamber within a housing that is positioned under said mixing beaker and has an outlet duct at its bottom, said housing having a closed front wall and a removable rear wall, while it is adapted to be detachably mounted with its rear side to an upright casing wall of the machine, a mixing member being mounted within the chamber adjacent the rear side of the housing for rotation about a lying axis, said mixing member being adapted to be driven by an electric motor provided behind said casing wall, characterized in that the disc-shaped mixing member is provided on a support shaft that has its ends rotatably supported in seats provided on the inner side of the front wall and of the rear wall respectively, the rearwardly facing end face of the mixing disc carrying a set of permanent magnets, which cooperate with a second set of magnets that are provided, at corresponding locations, on the forwardly directed end face of a coupling member on the shaft end of the electric motor.

2. A mixing device according to claim 1, characterized in that the coupling body is positioned closely adjacent the casing wall, the latter being closed as well.

3. A mixing device according to claims 1-2, characterized in that the circular rear wall slidingly fits in the rear end portion of the housing, with an O-ring therebetween.
